# EUROPÄISCHE PATENTANMELDUNG

(11) **EP 1 748 197 A1**
(43) Veröffentlichungstag der Anmeldung: **31.01.2007**
(21) Anmeldenummer: 06014474.8
(22) Anmeldetag: 12.07.2006
(51) Int. Cl.: F16B 21/08

(54) **Rastclip**

(30) Priorität: 29.07.2005 DE 202005011955 U
(71) Anmelder: Hellermann Tyton GmbH, 25436 Tornesch (DE)
(72) Erfinder: Spiess, Hagen, 22547 Hamburg (DE)
(74) Vertreter: Riesenberg, Axel

(57) **Zusammenfassung**

Rastclip zum Einrasten in eine Befestigungsöffnung mit mindestens drei sich zwischen einem Anschlagende (5) und einem Einsteckende (6) des Rastclips erstreckenden Führungsflächen (2), mit mindestens drei Rastelementen (1) und mit einem am Einsteckende (6) des Rastclips angeordneten Verbindungskörper (3), der die Führungsflächen (2) und die Rastelemente (1) verbindet, wobei die Rastelemente (1) federnd am Verbindungskörper (3) angeordnet sind. Erfindungsgemäß ist vorgesehen, dass die Führungsflächen (2) an einem Zentralkörper gebildet sind, der bezüglich einer sich zwischen dem Anschlagende (5) und dem Einsteckende (6) erstreckenden Achse in mindestens einer Dimension hinterschneidungsfrei ausgestaltet ist. Die Erfindung betrifft weiter ein entsprechendes Herstellungsverfahren.

## Beschreibung

Die Erfindung betrifft einen zum Einrasten in einer Befestigungsöffnung bestimmten Rastclip. Zwischen einem Anschlagende und einem Einsteckende des Rastclips erstrecken sich mindestens drei Führungsflächen. Der Rastclip umfasst weiterhin mindestens drei Rastelemente, die über einen am Einsteckende des Rastclips angeordneten Verbindungskörper mit den Führungsflächen verbunden sind, wobei die Verbindung zwischen dem Verbindungskörper und den Rastelementen federnd ausgestaltet ist. Die Erfindung betrifft weiterhin ein Verfahren zum Herstellen eines derartigen Rastclips unter Verwendung einer Spritzgussmaschine, die eine Mehrzahl von Stempeln zum Bilden einer Negativform des Rastclips aufweist.

Rastclips dieser Art werden seit langem für die Befestigung eines Elements an einem anderen verwendet, wobei eines der Elemente im Folgenden als Tragestruktur bezeichnet wird. Die Tragestruktur weist eine Befestigungsöffnung auf, die so gestaltet ist, dass der Rand der Befestigungsöffnung von einer Außenseite betrachtet hintergriffen werden kann. Der Rastclip wird mit seinem Einsteckende von der Außenseite her in die Befestigungsöffnung eingeführt. Dabei liegen die Führungsflächen am Rand der Befestigungsöffnung an und definieren dadurch eine feste Seitenausrichtung des Rastclips relativ zu der Befestigungsöffnung. Während des Einführens gleiten die im entspannten Zustand weiter nach außen ragenden Rastelemente ebenfalls am Rand der Befestigungsöffnung entlang und werden dadurch auf eine innere Position komprimiert. Bei vollständig eingeführtem Rastclip sind die Rastelemente über den Rand der Befestigungsöffnung hinausbewegt worden. Sie schnellen aus der komprimierten Position wieder nach außen und hintergreifen den Rand der Befestigungsöffnung. Der Rastclip kann nicht in entgegengesetzter Richtung wieder aus der Befestigungsöffnung herausgezogen werden.

Zumeist umfasst der Rastclip an seinem Anschlagende ein Anschlagelement, das ein weiteres Einschieben des Rastclips in die Befestigungsöffnung verhindert. Der Rastclip kann dann weder vor- noch zurückbewegt werden. Am von der Außenseite der Befestigungsöffnung zugänglichen Anschlagende des Rastclips können die zu befestigenden Elemente auf geeignete Weise angebracht werden.

Rastclips mit drei Führungsflächen und drei Rastelementen haben den Vorteil, dass sie eine besonders gute Verbindung zur Tragestruktur herstellen. Indem der Rastclip mit allen drei Führungsflächen am Rand der Befestigungsöffnung anliegt, ist die seitliche Ausrichtung des Rastclips relativ zur Befestigungsöffnung statisch genau definiert. Durch die drei den Rand der Befestigungsöffnung hintergreifenden Rastelemente wird ein Kippen des Rastclips gegenüber der Befestigungsöffnung verhindert.

Üblicherweise werden Rastclips dieser Art als Spritzgussteile aus Kunststoffmaterial hergestellt. Zunächst wird mit Hilfe einer Mehrzahl von Stempeln eine Negativform des Rastclips erzeugt. Ein thermoplastischer Kunststoff wird in flüssiger Form in die Negativform eingebracht und härtet dort aus. Zum Entformen des Rastclips werden die Stempel auf Entformwegen wegbewegt, so dass die Negativform sich auflöst und der fertige Rastclip freiliegt. Das Entformen des Rastclips ist nur dann möglich, wenn den Stempeln entlang der Entformwege keine in der Form des Rastclips enthaltenen Hinterschneidungen entgegenstehen. Grundsätzliche Voraussetzung für die Herstellung eines Spritzgussteils ist es also, dass die Stempel auf hinterschneidungsfreien Entformwegen bewegt werden können.

Bekannt ist ein Rastclip, bei dem drei Führungsflächen über einen am Anschlagende und einen weiteren am Einsteckende angeordneten ringförmigen Verbindungskörper verbunden sind. Am ringförmigen Verbindungskörper des Einsteckendes sind jeweils zwischen den Führungsflächen drei Rastelemente befestigt. Dieser Rastclip ist von seiner Funktionsweise her zufriedenstellend. Er weist jedoch wegen des sich in seinem Zentrum vom Einsteckende bis zum Anschlagende erstreckenden zylinderförmigen Hohlraums eine Vielzahl von Hinterschneidungen auf und ist deswegen aufwendig zu fertigen.

Der Erfindung liegt die Aufgabe zu Grunde, einen Rastclip gemäß dem Oberbegriff des Anspruchs 1, dessen Herstellung einen geringen Aufwand erfordert, sowie ein entsprechendes Herstellungsverfahren vorzustellen. Die Aufgabe wird gelöst durch die Merkmale der unabhängigen Ansprüche. Vorteilhafte Ausführungsformen finden sich in den Unteransprüchen.

Erfindungsgemäß sind die Führungsflächen des Rastclips an einem Zentralkörper gebildet, der bezüglich einer sich zwischen dem Anschlagende und dem Einsteckende erstreckenden Achse in mindestens einer Dimension hinterschneidungsfrei ausgestaltet ist. Das erfindungsgemäße Herstellungsverfahren zeichnet sich dadurch aus, dass die Stempel beim Entformen des in der Negativform erzeugten Rastclips bezüglich einer sich zwischen dem Anschlagende und dem Einsteckende des Rastclips erstreckenden Achse alle entlang von in derselben Dimension liegenden Entformwegen bewegt werden.

Durch die sich zwischen dem Anschlagende und dem Einsteckende des Rastclips erstreckenden Achse wird ein räumliches Bezugssystem für den Rastclip definiert. Eine Dimension des Bezugssystems ist die sich entlang der Achse erstreckende Dimension. Eine weitere Dimension ist die sich radial zur Achse erstreckende Dimension. Der Zentralkörper ist so gestaltet, dass er bezüglich mindestens einer dieser Dimensionen hinterschneidungsfrei ist.

Es ist nicht zwingend, dass die Achse eine Zentralachse bezogen auf die Gesamtform des Rastclips ist. Vielmehr kann die Achse gegenüber einer solchen Zentralachse verschoben sein.

Indem der Zentralkörper in mindestens einer Dimension hinterschneidungsfrei ist, wird es ermöglicht, dass alle Stempel des Spritzgusswerkzeugs zum Entformen des in der Negativform erzeugten Rastclips in einer Dimension bewegt werden können. Indem die Bewegung aller Stempel des Spritzgusswerkzeugs in einer Dimension erfolgt, kann das Spritzgusswerkzeug einfacher aufgebaut sein. Die Herstellung des erfindungsgemäßen Rastclips ist erleichtert.

In einer vorteilhaften Ausführungsform ist der Zentralkörper in Richtung der Achse hinterschneidungsfrei ausgestaltet. Bei derartigen Rastclips können die Stempel entlang von parallel zu der Achse ausgerichteten Entformwegen bewegt werden. Der Rastclip kann unter Verwendung von nicht mehr als zwei Stempeln hergestellt werden.

Dass der Rastclip auf diese Weise hergestellt werden kann, setzt voraus, dass das Anschlagende des Zentralkörpers frei zugänglich ist. Dies ist nicht selbstverständlich, da in der Praxis häufig ein Anschlagelement mit dem Anschlagende verbunden ist, um zu verhindern, dass der Rastclip vollständig durch die Befestigungsöffnung hindurch geführt werden kann. Um einen Rastclip mit Anschlagelement mit nur zwei parallel zur Achse bewegten Stempeln herstellen zu können, muss das Anschlagelement so gestaltet sein, dass es ebenfalls in Richtung der Achse hinterschneidungsfrei ist. Dazu ist es in der Verlängerung des Zentralköpers mit Durchbrechungen versehen, die ein Durchtauchen des Stempels ermöglichen.

Der Rastclip kann auch mit Anschlagelementen verbunden sein, die in Richtung der Achse nicht hinterschneidungsfrei sind. Es ist dann zwar der Zentralkörper selbst in Richtung der Achse zwar nach wie vor hinterschneidungsfrei, dies gilt jedoch nicht für den Rastclip insgesamt. Insbesondere in einem solchen Fall kann es vorteilhaft sein, den Zentralkörper in Radialrichtung hinterschneidungsfrei auszugestalten. Die Stempel des Spritzgusswerkzeugs können dann entlang von radial zu der Achse ausgerichteten Entformwegen bewegt werden. In diesem Fall können drei Stempel ausreichen, um die Negativform des Rastclips zu erzeugen.

In einer vorteilhaften Ausführungsform sind die Führungsflächen an Stegen des Zentralkörpers gebildet. Die im Zentrum des Rastclips zusammenlaufenden Stege bieten eine gute Stabilität bei gleichzeitig geringem Platzbedarf und geringem Materialaufwand.

Vorzugsweise haben zwei der Stege eine gemeinsame Ausrichtungsachse. Die Ausrichtungsachse kann die radialen Entformwege für zwei der Stempel definieren.

Zusammen mit einem dritten Steg können diese beiden Stege im Querschnitt eine T-Form bilden.

Zwischen jeweils zwei der Führungsflächen kann ein Rastelement angeordnet sein. Auf diese Weise kann der Rastclip eine besonders gute Verbindung zur Tragestruktur bieten, da sowohl die eine seitliche Bewegung verhindernden Führungsflächen als auch die ein Kippen verhindernden Rastelemente gleichmäßig am Umfang des Rastclips verteilt sind.

Die Position in Seitenrichtung des Rastclips relativ zur Befestigungsöffnung wird durch den am Anschlagende liegenden Teil der Führungsflächen bestimmt. Vorteilhaft ist es, wenn die Führungsflächen in diesem Bereich so ausgebildet sind, dass sie mit einer an die Form der Befestigungsöffnung angepassten gedachten Berandungslinie verbunden werden können. Es ist in diesem Zusammenhang nicht vorausgesetzt, dass die Befestigungsöffnung rund ist, vielmehr kann die Befestigungsöffnung auch eine Oval-, Rechteck-, Polygonalform oder Ähnliches haben.

Vorteilhafterweise sind die Führungsflächen über mindestens ein Drittel, vorzugsweise mindestens die Hälfte ihrer Erstreckung vom Anschlagende in Richtung Einsteckende mit einer an die Form der Befestigungsöffnung angepassten gedachten Linie verbindbar. Auf diese Weise ist die seitliche Position des Rastclips bereits fest definiert, bevor die Rastelemente eingerastet sind. Das Einführen des Rastclips in die Befestigungsöffnung wird erleichtert.

Um das Einführen des Einsteckendes in die Befestigungsöffnung weiter zu erleichtern, können die Führungsflächen zum Einsteckende hin konisch aufeinander zulaufen.

Das vom Verbindungskörper abgewandte Ende der Rastelemente kann freischwingend gestaltet sein. Auf diese Weise ist nur ein geringer Krafteinsatz erforderlich, um die Rastelemente beim Passieren der Befestigungsöffnung nach innen zu bewegen. Auch dies erleichtert die Bedienung des Rastclips.

Die vom Verbindungskörper abgewandten Enden der Rastelemente liegen vorzugsweise in einem entspannten Zustand außerhalb der gedachten Berandungslinie und in einem gespannten Zustand innerhalb der gedachten Berandungslinie.

Die Erfindung wird nachfolgend unter Bezugnahme auf die beigefügten Zeichnungen anhand einer vorteilhaften Ausführungsform beispielhaft beschrieben. Es zeigen:
- Fig. 1: eine Draufsicht auf einen erfindungsgemäßen Rastclip;
- Fig. 2: den Rastclip aus Fig. 1 mit angedeutetem Entformweg in Richtung der Achse für zwei Stempel; und
- Fig. 3: den Rastclip aus Fig. 1 mit angedeuteten Entformwegen in Radialrichtung für drei Stempel.

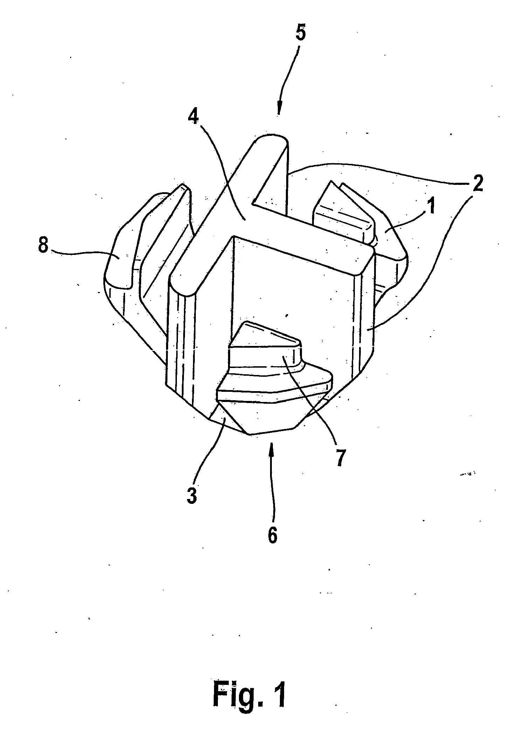

Ein Rastclip in Fig. 1 umfasst einen im Querschnitt T-förmigen Zentralkörper 4, der sich vom Anschlagende 5 bis zum Einsteckende 6 des Rastclips erstreckt. An den Stirnflächen der die T-Form bildenden Stege sind Führungsflächen 2 angeordnet, die sich über die gesamte Länge des Zentralkörpers 4 erstrecken.

Am Anschlagende 5 geht der Zentralkörper in einen Verbindungskörper 3 über, die Führungsflächen 2 laufen dort konisch aufeinander zu. Am Verbindungskörper 3 sind drei Rastelemente 1 befestigt, wobei die Verbindung federnd ausgestaltet ist. Die Rastelemente 1 erstrecken sich vom Verbindungskörper 4 in Richtung des Anschlagendes 5 des Rastclips.

Der Rastclip ist dazu bestimmt, in einer Befestigungsöffnung einer nicht dargestellten Tragestruktur eingesteckt zu werden und dort einzurasten. Die Führungsflächen 2 sind so gestaltet, dass sie mit einer gedachten Linie (Berandungslinie) verbunden werden können, die der Form der Befestigungsöffnung entspricht. Wenn der Rastclip mit seinem Einsteckende 6 voran in die Befestigungsöffnung eingeführt wird, liegen die drei Führungsflächen 2 während des weiteren Einsteckvorgangs am Rand der Befestigungsöffnung an, so dass der Rastclip eine feste Seitenausrichtung hat. Die Rastelemente 1 liegen in entspanntem Zustand außerhalb der die Befestigungsöffnung wiedergebenden gedachten Berandungslinie. Während des Einsteckens des Rastclips gleiten die Außenflächen der Rastelemente 1 am Rand der Befestigungsöffnung entlang, die Rastelemente 1 werden nach innen gedrückt. Beim weiteren Einstecken des Rastclips in die Befestigungsöffnung werden die Außenflächen der Rastelemente 1 über die Ebene der Befestigungsöffnung hinausgeführt. Die Rastelemente 1 können sich entspannen, so dass sie den Rand der Befestigungsöffnung mit Stützflächen 8 hintergreifen und die Flächen 7 am Rand der Befestigungsöffnung anliegen.

Um zu verhindern, dass der Rastclip sich weiter in Einsteckrichtung bewegen kann, ist ein nicht dargestelltes Anschlagelement erforderlich. Der Anschlag kann beispielsweise darin bestehen, dass das Einsteckende an einem mit der Befestigungsöffnung verbundenen Anschlag anstößt. In den meisten Fällen wird aber am Anschlagende 5 des Zentralkörpers 4 ein Anschlagelement angeordnet sein, das an der die Befestigungsöffnung umgebenden Tragstruktur anliegt, sobald die Rastelemente 1 eingerastet sind.

Durch die an der Befestigungsöffnung anliegenden Führungsflächen 2 und die den Rand der Befestigungsöffnung hintergreifenden Stützflächen 8 kann der Rastclip weder aus der Befestigungsöffnung herausgezogen noch gekippt werden. Der Rastclip bietet eine feste Verbindung zur Tragestruktur und ist bereit für die Aufnahme des zu befestigenden Elements.

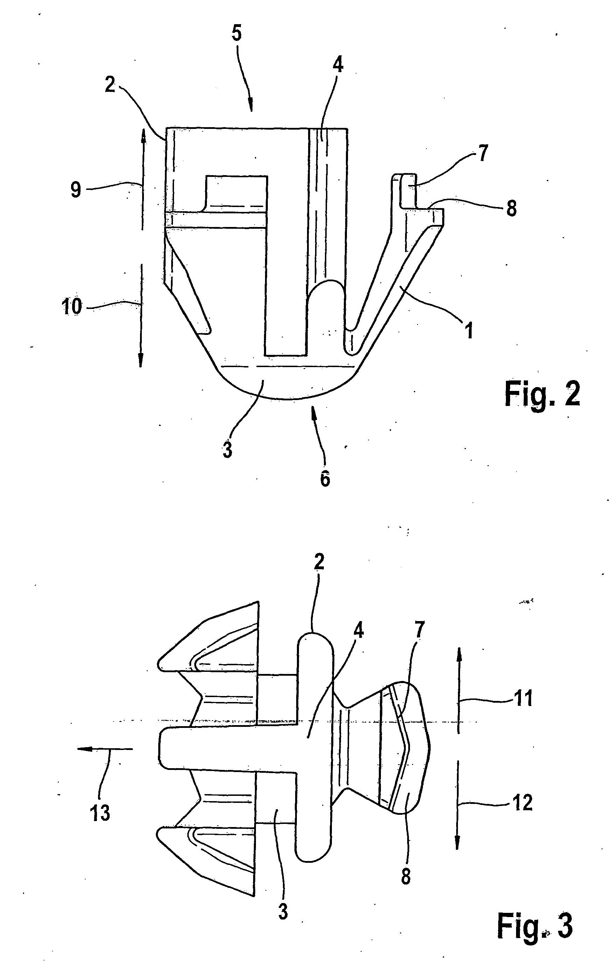

In Fig. 2 deuten Pfeile 9, 10 an, in welche Richtung sich die Stempel eines nicht dargestellten Spritzgusswerkzeugs zum Entformen des in der Negativform erzeugten Rastclips bewegen. Die Entformwege liegen parallel zu einer sich zwischen dem Anschlagende 5 und dem Einsteckende 6 erstreckenden Achse des Rastclips. Der Rastclip insgesamt und insbesondere der Zentralkörper 4 sind so gestaltet, dass sie in Richtung der Achse hinterschneidungsfrei sind, es reichen also zwei Stempel aus, um den gesamten Rastclip herzustellen.

In Fig. 3 sind durch Pfeile 11, 12, 13 die in Radialrichtung liegenden Entformwege für drei Stempel des Spritzgusswerkzeugs angedeutet. Der Zentralkörper 4 ist in Radialrichtung hinterschneidungsfrei ausgestaltet und die Flächen der Rastelemente sind zu den Flächen des Zentralkörpers ausgerichtet, so dass drei in Radialrichtung herangeführte Stempel ausreichen, um die Negativform für den Rastclip zu bilden.

In beiden Beispielen der Fig. 2, 3 liegen die Entformwege aller Stempel in derselben Dimension. Dies ermöglicht eine einfache Gestaltung des Spritzgusswerkzeugs. Ein besonderer Vorteil des erfindungsgemäßen Rastclips liegt darin, dass nur zwei, beziehungsweise drei Stempel erforderlich sind, um die vollständige Negativform des Rastclips zu bilden.

## Patentansprüche

1. Rastclip zum Einrasten in eine Befestigungsöffnung mit mindestens drei sich zwischen einem Anschlagende (5) und einem Einsteckende (6) des Rastclips erstreckenden Führungsflächen (2), mit mindestens drei Rastelementen (1) und mit einem am Einsteckende (6) des Rastclips angeordneten Verbindungskörper (3), der die Führungsflächen (2) und die Rastelemente (1) verbindet, wobei die Rastelemente (1) federnd am Verbindungskörper (3) angeordnet sind, **dadurch gekennzeichnet, dass** die Führungsflächen (2) an einem Zentralkörper gebildet sind, der bezüglich einer sich zwischen dem Anschlagende (5) und dem Einsteckende (6) erstreckenden Achse in mindestens einer Dimension hinterschneidungsfrei ausgestaltet ist.

2. Rastclip nach Anspruch 1, **dadurch gekennzeichnet, dass** der Zentralkörper (4) in Richtung der Achse hinterschneidungsfrei ausgestaltet ist.

3. Rastclip nach Anspruch 1 oder 2, **dadurch gekennzeichnet, dass** der Zentralkörper (4) in Radialrichtung hinterschneidungsfrei ausgestaltet ist.

4. Rastclip nach einem der Ansprüche 1 bis 3, **dadurch gekennzeichnet, dass** die Führungsflächen (2) an Stegen des Zentralkörpers (4) gebildet sind.

5. Rastclip nach Anspruch 4, **dadurch gekennzeichnet, dass** zwei der Stege von Führungsfläche zu Führungsfläche eine gemeinsame Ausrichtungsachse haben.

6. Rastclip nach Anspruch 5, **dadurch gekennzeichnet, dass** die Stege im Querschnitt eine T-Form bilden.

7. Rastclip nach einem der Ansprüche 1 bis 6, **dadurch gekennzeichnet, dass** jeweils zwischen zwei Führungsflächen (2) ein Rastelement (1) angeordnet ist.

8. Rastclip nach einem der Ansprüche 1 bis 7, **dadurch gekennzeichnet, dass** die Führungsflächen (2) am Anschlagende (5) so ausgebildet sind, dass sie mit einer an die Form der Befestigungsöffnung angepassten gedachten Linie verbindbar sind.

9. Rastclip nach Anspruch 8, **dadurch gekennzeichnet, dass** die Führungsflächen (2) über mindestens ein Drittel, vorzugsweise mindestens die Hälfte ihrer Erstreckung vom Anschlagende (5) in Richtung Einsteckende (6) mit der an die Form der Befestigungsöffnung angepassten gedachten Linie verbindbar sind.

10. Rastclip nach Anspruch 8 oder 9, **dadurch gekennzeichnet, dass** die Führungsflächen (2) zum Einsteckende hin konisch aufeinander zulaufen.

11. Rastclip nach einem der Ansprüche 1 bis 10, **dadurch gekennzeichnet, dass** das vom Verbindungskörper (3) abgewandte Ende der Rastelemente (1) frei schwingend ist.

12. Rastclip nach einem der Ansprüche 8 bis 11, dass die vom Verbindungskörper (4) abgewandten Enden der Rastelemente (1) in einem entspannten Zustand außerhalb der gedachten Linie und in einem gespannten Zustand innerhalb der gedachten Linie liegen.

13. Verfahren zum Herstellen eines Rastclips, der mindestens drei sich zwischen einem Anschlagende (5) und einem Einsteckende (6) des Rastclips erstreckende Führungsflächen (2), mindestens drei Rastelemente (1) und einen am Einsteckende (6) des Rastclips angeordneten Verbindungskörper (3) umfasst, wobei der Verbindungskörper die Führungsflächen (2) und die Rastelemente (1) verbindet und wobei die Rastelemente (1) federnd am Verbindungskörper (3) angeordnet sind, unter Verwendung eines Spritzgusswerkzeugs, das eine Mehrzahl von Stempeln zum Bilden einer Negativform des Rastclips aufweist, **dadurch gekennzeichnet, dass** die Stempel beim Entformen des in der Negativform erzeugte Rastclips bezüglich einer sich zwischen dem Anschlagende (5) und dem Einsteckende (6) des Rastclips erstreckende Achse entlang von in derselben Dimension liegenden Entformwegen bewegt werden.

14. Verfahren nach Anspruch 13, **dadurch gekennzeichnet, dass** die Stempel entlang von parallel zu der Achse ausgerichteten Entfomwegen bewegt werden.

15. Verfahren nach Anspruch 14, **dadurch gekennzeichnet, dass** der Rastclip unter Verwendung von zwei Stempeln hergestellt wird.

16. Verfahren nach Anspruch 13, **dadurch gekennzeichnet, dass** die Stempel entlang von radial zu der Achse ausgerichteten Entformwegen bewegt werden.

17. Verfahren nach Anspruch 16, **dadurch gekennzeichnet, dass** der Rastclip unter Verwendung von drei Stempeln herausgestellt wird.
